# EUROPÄISCHE PATENTSCHRIFT

(11) **EP 0 844 771 B1**
(45) Veröffentlichungstag und Bekanntmachung des Hinweises auf die Patenterteilung: **25.07.2007**
(21) Anmeldenummer: 97117098.0
(22) Anmeldetag: 02.10.1997
(51) Int. Cl.: H04M 1/03, H04M 1/04, A45F 5/02

(54) **Telefonhandapparat**
Telephone handset
Combiné téléphonique

(30) Priorität: 20.11.1996 DE 19647979
(43) Veröffentlichungstag der Anmeldung: 27.05.1998
(73) Patentinhaber: IPCom GmbH & Co. KG, 82049 Pullach (DE)
(72) Erfinder: Eckhard, Hans-Ulrich, 60488 Frankfurt (DE); Baier, Klaus-Peter, 63179 Obertshausen (DE)
(74) Vertreter: Gigerich, Jan

(56) Entgegenhaltungen:
- DE-C- 4 310 602
- DE-U- 29 509 559
- DE-U- 29 615 321
- US-A- 5 261 122
- US-A- 5 488 759

## Beschreibung

### Stand der Technik

Die Erfindung geht von einem Handapparat nach der Gattung des Hauptanspruchs aus.

Von der Firma Siemens ist das Mobilteil Gigaset 1000 C bekannt, bei dem ein Trageclip von der Rückseite des Mobilteils her auf das Mobilteil gesetzt werden kann. Auf den Seitenflächen des Mobilteils befinden sich Nuten in der Höhe des Displays, in die die Nasen am Bügel des Trageclips einrasten müssen.

Die DE-U 29615321 beschreibt einen Handapparat mit einem Gehäuse und einem Trageteil, wobei eine federnd mit dem Trageteil verbundene Taste vorgesehen ist, wobei das Trageteil in eine Öffnung des Gehäuses einsetzbar ist, wobei bei in das Gehäuse eingesetztem Trageteil eine Rastnase der Taste in eine Rastöffnung des Gehäuses rastet und wobei das Trageteil durch eine auf einem ersten Steg des Gehäuses aufliegende Befestigungsrippe am Gehäuse arretiert ist.

Aus der DE-U 29509559 ist eine Befestigungsvorrichtung für ein Mobiltelefon dargestellt, bei welchem eine Ankuppeleinrichtung und eine Fassung zur lösbaren Aufnahme der Ankuppelvorrichtung vorgesehen ist.

Die DE-C 4310602 bezieht sich auf einen Befestigungsclip für Kommunikationsgeräte wie das Mobilteil eines schnurlosen Telefons. Um eine glatte Oberfläche des Telefons zu erhalten, aber dennoch eine Clipbefestigung zu ermöglichen, ist der Befestigungsclip versenkbar am Gerät ausgebildet.

### Vorteile der Erfindung

Der erfindungsgemäße Handapparat mit den Merkmalen des Hauptanspruchs hat demgegenüber den Vorteil, daß eine einfache und stabile Befestigung des Trageteils realisiert wird, bei der kein zusätzliches Verriegelungselement benötigt wird.

Durch die in den Unteransprüchen aufgeführten Maßnahmen sind vorteilhafte Weiterbildungen und Verbesserungen des im Hauptanspruch angegebenen Handapparates möglich.

Vorteilhaft ist, daß die Öffnung des Gehäuses etwa kreisförmig ist und daß zum Befestigen des Trageteils mit dem Gehäuse die Rastnase und die Befestigungsrippe in die Öffnung bringbar sind, durch eine Drehung des Trageteils in der Öffnung die Rastnase in der Rastöffnung einrastbar ist und die Befestigungsrippe auf der dem Trageteil abgewandten Seite des ersten Steges aufschiebbar ist. Auf diese Weise ist die Montage des Trageteils am Gehäuse des Handapparates schnell und einfach möglich.

Besonders vorteilhaft ist auch, daß zum Entfernen des Trageteils von dem Gehäuse durch Drücken der Taste die Rastnase aus der Rastöffnung bringbar ist und die Befestigungsrippe durch Drehung des Trageteils in der Öffnung vom ersten Steg wegschiebbar ist. Auf diese Weise ist auch die Demontage des Trageteils von dem Gehäuse schnell und einfach möglich, erfordert wenig Kraftaufwand und ist äußerst bedienungsfreundlich.

Eine besonders einfache Realisierung der Taste wird vorteilhafterweise dadurch bewirkt, daß das Trageteil einen etwa einen 3/4-Kreis bildenden Schlitz aufweist.

Vorteilhaft ist insbesondere auch, daß das Trageteil an seiner dem Gehäuse zugewandten Seite eine den Schlitz zumindest teilweise begrenzende Seitenwand aufweist, die mit einer entsprechenden in der Öffnung des Gehäuses angeordneten Führung korrespondiert. Auf diese Weise wird die Drehung des Trageteils in der Öffnung des Gehäuses stabilisiert und somit für den Benutzer vereinfacht. Die Montage und Demontage des Trageteils kann somit noch schneller durchgeführt werden.

Ein weiterer Vorteil besteht darin, daß am Rand der Öffnung ins Innere des Gehäuses gerichtete Begrenzungsstege so angeordnet sind, daß zum Einrasten und Entrasten jeweils eine Drehrichtung für das Trageteil vorgegeben ist. Auf diese Weise wird die Montage und Demontage des Trageteils für den Benutzer weiter vereinfacht.

Vorteilhaft ist außerdem, daß jeweils eine etwa einen 1/4-Kreis bildende Drehung des Trageteils zum Einrasten und Entrasten erforderlich ist. Auf diese Weise ist die Montage und Demontage des Trageteils besonders schnell möglich.

### Zeichnung

Ein Ausführungsbeispiel der Erfindung ist in der Zeichnung dargestellt und in der nachfolgenden Beschreibung näher erläutert. Es zeigen Figur 1 ein Gehäuse eines Handapparates mit aufgesetztem Trageteil, Figur 2 einen Montagevorgang für das Trageteil, Figur 3 eine Ansicht der dem Gehäuse zugewandten Seite des Trageteils, Figur 4 eine Ansicht der dem Gehäuse abgewandten Seite des Trageteils, Figur 5 eine Ansicht der dem Trageteil zugewandten Seite des Gehäuses und Figur 6 eine Ansicht der dem Trageteil abgewandten Seite des Gehäuses.

### Beschreibung des Ausführungsbeispiels

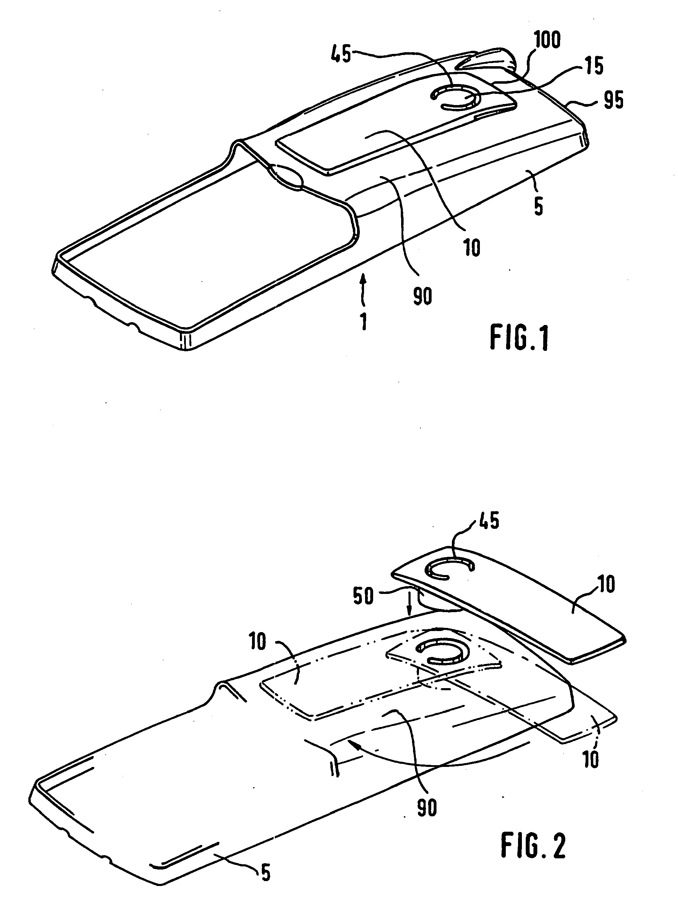

In Figur 1 kennzeichnet 1 einen Handapparat, der ein Gehäuse 5 und ein mit dem Gehäuse 5 verbundenes Trageteil 10 umfaßt. Das Trageteil 10 wird durch eine rechteckige, an den Kanten abgerundete Scheibe gebildet und weist einen etwa einen 3/4-Kreis bildenden Schlitz 45 auf, wodurch eine durch den Schlitz 45 teilweise umschlossene Taste 15 vom Trageteil 10 abgesetzt ist. Die etwa 1/4-kreisförmige Ergänzung des Schlitzes 45 zum Vollkreis bildet eine federnde Verbindung des Trageteils 10 mit der Taste 15. Das Trageteil 10 ist in Längsrichtung auf der Oberseite 90 des Gehäuses 5 in der Nähe der Oberkante 95 des Gehäuses 5 mit dem Gehäuse 5 an der Stelle des Schlitzes 45, der sich bei der der Oberkante 95 des Gehäuses 5 zugewandten Oberkante 100 des Trageteils 10 befindet, verbunden. An der Stelle des Schlitzes 45 ist das Trageteil 10 in Querrichtung leicht abgeknickt, so daß der Handapparat 1 durch das Trageteil 10 in Hosen- oder Hemdtaschen geklemmt werden kann. Der Handapparat 1 kann als schnurloses Telefon, als Funkgerät oder dergleichen ausgebildet sein.

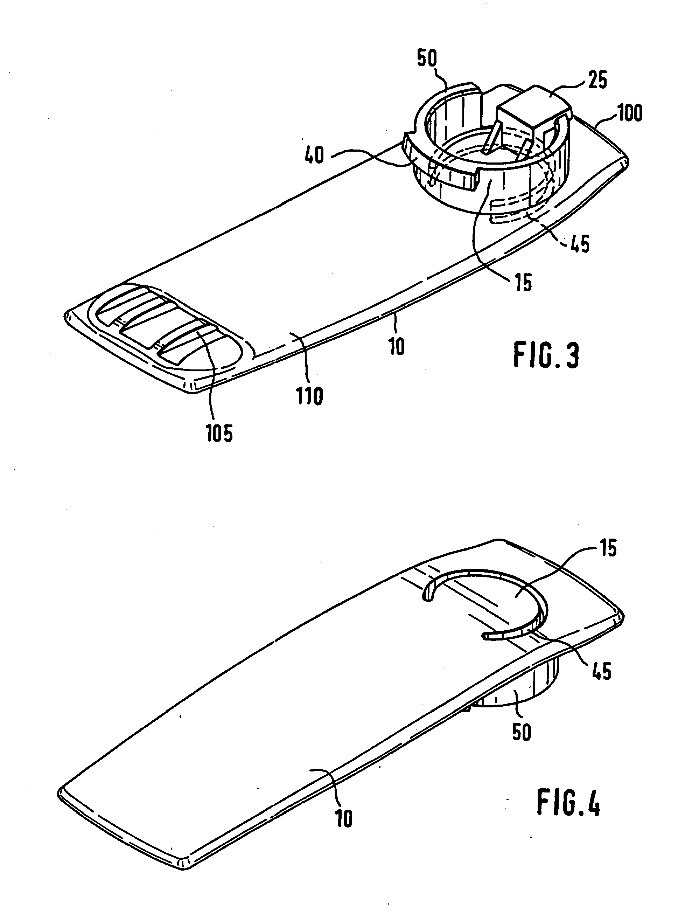

In Figur 3 ist eine Ansicht der dem Gehäuse 5 zugewandten Seite des Trageteils 10 dargestellt, wobei das Trageteil 10 an seiner dem Gehäuse 5 zugewandten Seite eine den Schlitz 45 bis auf einen etwa 1/4-kreisförmigen Abschnitt begrenzende Seitenwand 50 aufweist, die auch über die 1/4-kreisförmige Ergänzung des Schlitzes 45 zum Vollkreis fortgeführt ist. Dabei weist die Seitenwand 50 bei der etwa 1/4-kreisförmigen Ergänzung des Schlitzes 45 zum Vollkreis an ihrem dem Trageteil 10 abgewandten Ende eine von der Seitenwand 50 nach außen abgesetzte Befestigungsrippe 40 auf. Die etwa 1/4-kreisförmige Ergänzung des Schlitzes 45 zum Vollkreis bildet den der Oberkante 100 des Trageteils 10 abgewandten Teil des zum Vollkreis ergänzten Schlitzes 45. Die Taste 15 weist an ihrer dem Gehäuse 5 und der Oberkante 100 des Trageteils 10 zugewandten Seite eine in etwa rechteckig abgewinkelte Rastnase 25 auf, wobei der abgewinkelte Teil in Richtung zur Oberkante 100 des Trageteils 10 weist und über den Schlitz 45 hinausreicht. An seiner dem Gehäuse 5 zugewandten Seite weist das Trageteil 10 an dem seiner Oberkante 100 gegenüberliegenden Ende Nocken 105 auf, die die Befestigung des Handapparates 1 bei auf das Gehäuse 5 aufgesetztem Trageteil 10 zusammen mit der Abwinklung des von der Oberkante 100 des Trageteils 10 abgewandten unteren Teils 110 zur Oberseite 90 des Gehäuses 5 hin unterstützen. Die Seitenwand 50 ist an der Stelle unterbrochen, bei der die Rastnase 25 über den Schlitz 45 hinausragt.

In Figur 4 ist eine Ansicht der von dem Gehäuse 5 abgewandten Seite des Trageteils 10 dargestellt, bei der die Seitenwand 50 aufgrund der perspektivischen Darstellung ebenfalls zu sehen ist.

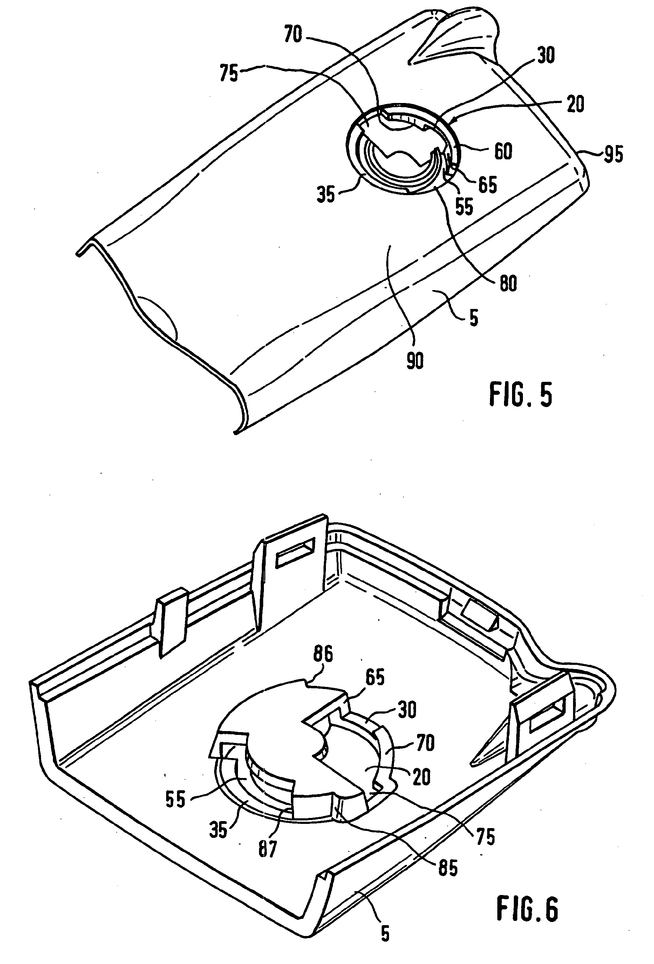

In Figur 5 ist eine Ansicht der Oberseite 90 des Gehäuses 5 dargestellt. In der Nähe der Oberkante 95 des Gehäuses 5 weist die Oberseite 90 des Gehäuses 5 eine etwa kreisförmige Öffnung 20 auf. An der der Oberkante 95 des Gehäuses 5 abgewandten Seite der Öffnung 20 ragt ein erster Steg 35 etwa 1/3-kreisförmig in die Öffnung 20 hinein. An der der Oberkante 95 des Gehäuses 5 zugewandten Seite der Öffnung 20 ragt ein zweiter Steg 60 ebenfalls etwa 1/3-kreisförmig in die Öffnung 20 hinein. Weiterhin weist die Öffnung 20 auf ihrer der Oberseite 90 abgewandten Seite eine Führung 55 auf. Die Führung 55 korrespondiert mit der Seitenwand 50 des Trageteils 10 und bildet eine etwa 3/4-kreisförmige Rille, in die die Seitenwand 50 greifen kann und in der sie eine geführte Drehung vollziehen kann. An der Seitenwand der Öffnung 20 ist zwischen den beiden Stegen 35 und 60 eine erste Aussparung 75 zur Einführung der Rastnase 25 und eine zweite Aussparung 80 zur Einführung der Befestigungsrippe 40 vorgesehen. Die beiden Aussparungen 75 und 80 liegen einander genauso wie die Rastnase 25 und die Befestigungsrippe 40 des Trageteils 10 gegenüber. Der zweite Steg 60 weist jeweils eine ins Innere des Gehäuses 5 gerichtete erste und zweite Begrenzungswand 65 und 70 auf, wobei die zweite Begrenzungswand 70 an der der ersten Aussparung 75 zugewandten Seite des zweiten Steges 60 und die erste Begrenzungswand 65 an der der zweiten Aussparung 80 zugewandten Seite des zweiten Steges 60 angeordnet ist. Die zweite Begrenzungswand 70 ist dabei keilförmig ausgebildet, wobei mit zunehmenden Abstand von der ersten Aussparung 75 die zweite Begrenzungswand 70 in zunehmenden Maße ins Innere des Gehäuses 5 hineinragt. Die erste Begrenzungswand 65 ragt hingegen mit gleichmäßiger Ausdehnung ins Innere des Gehäuses 5 hinein. Zwischen der ersten und der zweiten Begrenzungswand 65 und 70 bleibt eine eine Rastöffnung 30 bildende Aussparung frei, die von der ersten und der zweiten Aussparung 75 und 80 jeweils 1/4-kreisförmig abgesetzt ist.

In Figur 6 ist eine Ansicht der Öffnung 20 des Gehäuses 5 auf der der Oberseite 90 abgewandten Seite des Gehäuses 5 dargestellt. Dabei sind am Rand der Öffnung 20 ein erster, ein zweiter und ein dritter Begrenzungssteg 85, 86 und 87 angeordnet. Der erste Begrenzungssteg 85 ragt dabei an der der zweiten Begrenzungswand 70 abgewandten Seite der ersten Aussparung 75 ins Innere des Gehäuses 5 hinein und verhindert eine Drehung des Trageteils 10 in diese Richtung, indem sie beim Einsetzen der Rastnase 25 in die erste Aussparung 75 die Rastnase 25 blockiert. Zwischen der in Figur 6 nicht sichtbaren zweiten Aussparung 80, die der ersten Aussparung 75 gegenüberliegt und der Rastöffnung 30 ragt der zweite Begrenzungssteg 86 ins Innere des Gehäuses 5 hinein und blokkiert beim Einsetzen der Befestigungsrippe 40 in die zweite Aussparung 80 die Befestigungsrippe 40 und verhindert so die Drehung des Trageteils 10 im Uhrzeigersinn gemäß der in Figur 6 gezeigten Perspektive genauso wie die erste Befestigungsrippe 85. Dasselbe wird auch durch den ins Innere des Gehäuses 5 gerichteten dritten Begrenzungssteg 87 bewirkt, der vom ersten Steg 35 an einer Stelle der Öffnung 20, die von der ersten Aussparung 75 ungefähr den gleichen Abstand aufweist, wie etwa die Mitte der zweiten Begrenzungswand 70, ins Innere des Gehäuses 5 hineinragt. Der dritte Begrenzungssteg 87 ist dabei auf der der ersten Aussparung 75 abgewandten Seite des ersten Begrenzungssteges 85 in der Nähe eines Endes der Führung 55 angebracht, die sich von der der zweiten Begrenzungswand 70 abgewandten Seite der ersten Aussparung 75 etwa 3/4-kreisförmig bis zur ersten Begrenzungswand 65 erstreckt. Der dritte Begrenzungssteg 87 verhindert somit zusammen mit der ersten Begrenzungswand 65, daß das Trageteil 10 mit seiner Rastnase 25 über die Rastöffnung 30 hinaus in Richtung der zweiten Aussparung 80 gedreht werden kann. Durch die drei Begrenzungsstege 85, 86 und 87 und die erste Begrenzungswand 65 läßt sich mit dem Trageteil 10 in der Öffnung 20 eine etwa einen 1/4-Kreis bildende Drehung durchführen.

Figur 2 zeigt die zum Befestigen des Trageteils 10 mit dem Gehäuse 5 erforderliche Vorgehensweise. Dabei wird das Trageteil 10 in etwa rechtwinklig an die Oberseite 90 des Gehäuses 5 geführt, so daß die Rastnase 25 in die erste Aussparung 75, die Befestigungsrippe 40 in die zweite Aussparung 80 und die Seitenwand 50 in die Führung 55 greift. Durch den ersten und den zweiten Begrenzungssteg 85 und 86 ist die Drehrichtung für die Montage des Trageteils 10 gemäß der Pfeilrichtung in Figur 2 im Uhrzeigersinn festgelegt. Dabei wird die Rastnase 25 über die keilförmige zweite Begrenzungswand 70 geschoben, wodurch die Taste 15 zur Oberseite 90 des Gehäuses 5 hin federnd eingedrückt wird. Gleichzeitig schiebt sich die Befestigungsrippe 40 auf die dem Trageteil 10 bzw. der Oberseite 90 des Gehäuses 5 abgewandten Seite des ersten Steges 35 auf. Nach einer etwa 1/4-kreisförmigen Drehung rastet die Rastnase 25 in die Rastöffnung 30 ein. Durch das Einrasten der Rastnase 25 in die Rastöffnung 30 und die Auflage der Befestigungsrippe 40 auf dem Steg 35 ist das Trageteil 10 mit dem Gehäuse 5 verriegelt. Beim Einrasten wird die Rastnase 25 am Trageteil 10 gespannt und "klickt" deutlich hörbar in der Endlage. Durch diesen Quittungston wird dem Benutzer die Endlage des Trageteils 10 hörbar gemeldet.

Zum Entfernen des Trageteils 10 von dem Gehäuse 5 muß die Taste 15 vom Benutzer in Richtung zur Oberseite 90 des Gehäuses 5 gedrückt werden, damit die Rastnase 25 aus der Rastöffnung 30 gebracht werden kann. Anschließend kann aufgrund des dritten Begrenzungssteges 87 und der ersten Begrenzungswand 65 das Trageteil 10 zum Entrasten nur im Gegenuhrzeigersinn gedreht werden. Dabei wird die Befestigungsrippe 40 vom ersten Steg 35 zur zweiten Aussparung 80 und die Rastnase 25 über die zweite Begrenzungswand 70 zur ersten Aussparung 75 weggeschoben. Nach etwa einer 1/4-kreisförmigen Drehung gegen den Uhrzeigersinn kann dann das Trageteil 10 aus der Öffnung 20 entnommen werden.

Die Drehung des Trageteils 10 in der Öffnung 20 des Gehäuses 5 wird durch die Führung der Seitenwand 50 in der Führung 55 erleichtert und stabilisiert. Zur Abdeckung der Öffnung 20 bei entferntem Trageteil 10 kann eine entsprechend ausgebildete Abdeckvorrichtung auf die Öffnung 20 aufgesetzt werden, die an ihrer dem Gehäuse 5 zugewandten Seite genauso wie das Trageteil 10 mit einer Rastnase, einer Befestigungsrippe und einer Seitenwand versehen und auf gleiche Weise wie das Trageteil 10 mit einem Schlitz 45 und einer Taste 15 ausgestattet sein kann. Die Montage bzw. Demontage einer solchen Abdeckvorrichtung erfolgt dann auf die beschriebene Weise, wobei die Taste 15 zusätzlich mit einem Schlitz zum Einbringen einer Münze oder eines Verdrehwerkzeuges auf der dem Gehäuse 5 abgewandten Seite der Abdeckvorrichtung ausgestattet sein kann, um die Montage und Demontage der Abdeckvorrichtung zu erleichtern.

Es sind jedoch auch einfachere Abdeckvorrichtungen denkbar, die beispielsweise die Öffnung 20 vollständig abdecken und in die erste Aussparung 75 und die zweite Aussparung 80 greifen und selbsthemmend gegen die Seitenwände der Öffnung 20 drücken. Die Verbindung der Abdeckvorrichtung mit dem Gehäuse 5 muß dabei nicht so stabil wie die Verbindung des Trageteils 10 mit dem Gehäuse 5 sein, da sie nicht mit dem Gewicht des Handapparates 1 durch Tragen in einer Hemd- oder Hosentasche belastet wird.

## Patentansprüche

1. Handapparat (1), insbesondere Schnurlostelefon, mit einem Gehäuse (5) und einem Trageteil (10), wobei eine federnd mit dem Trageteil (10) verbundene Taste (15) vorgesehen ist, wobei das Trageteil (10) in eine Öffnung (20) des Gehäuses (5) einsetzbar ist, wobei bei in das Gehäuse eingesetztem Trageteil (10) eine Rastnase (25) der Taste (15) in eine Rastöffnung (30 des Gehäuses (5) rastet und das Trageteil (10) durch eine auf einem ersten Steg (35) des Gehäuses (5) aufliegende Befestigungsrippe (40) an Gehäuse (5) arretiert ist, **dadurch gekennzeichnet, dass** die Öffnung (20) etwa kreisförmig ist, dass zum Befestigen des Trageteils (10) mit dem Gehäuse (5) die Rastnase (25) und die Befestigungsrippe (40) in die Öffnung (20) bringbar sind, durch eine Drehung des Trageteils (10) in der Öffnung (20) die Rastnase (25) in die Rastöffnung (30) einrastbar ist und die Bofestigungsrippe (40) auf der dem Trageteil (10) abgewandten Seite des ersten Stegs (35) aufschiebbar ist.

2. Handapparat (1) nach Anspruch 1, **dadurch gekennzeichnet, daß** zum Entfernen des Trageteils (10) von dem Gehäuse (5) durch Drücken der Taste (15) die Rastnase (25) aus der Rastöffnung (30) bringbar ist und die Befestigungsrippe (40) durch Drehung des Trageteils (10) in der Öffnung (20) vom ersten Steg (35) wegschiebbar ist.

3. Handapparat (1) nach Anspruch 1 oder 2, **dadurch gekennzeichnet, daß** die Taste (15) durch einen etwa einen 3/4-Kreis bildenden Schlitz (45) des Trageteils (10) gebildet ist.

4. Handapparat (1) nach einem der vorherigen Ansprüche, **dadurch gekennzeichnet, daß** das Trageteil (10) an seiner dem Gehäuse (5) zugewandten Seite eine den Schlitz (45) zumindest teilweise begrenzende Seitenwand (50) aufweist, die mit einer entsprechenden in der Öffnung (20) des Gehäuses (5) angeordneten Führung (55) korrespondiert.

5. Handapparat (1) nach einem der vorherigen Ansprüche, **dadurch gekennzeichnet, daß** der erste Steg (35) in die Öffnung (20) hineinragt und die Befestigungsrippe (40) an der Seitenwand (50) befestigt ist.

6. Handapparat (1) nach einem der vorherigen Ansprüche, **dadurch gekennzeichnet, daß** die Rastöffnung (30) auf einem in die Öffnung (20) hineinragenden zweiten Steg (60) angeordnet ist und durch zwei ins Innere des Gehäuses (5) gerichtete Begrenzungswände (65, 70) gebildet ist, wobei eine der Begrenzungswände (70) zum Einrasten der Rastnase (25) keilförmig ausgebildet ist.

7. Handapparat (1) nach einem der vorherigen Ansprüche, **dadurch gekennzeichnet, daß** in der Öffnung (20) zwischen den Stegen (35, 60) eine erste Aussparung (75) zur Einführung der Rastnase (25) und eine zweite Aussparung (80) zur Einführung der Befestigungsrippe (40) vorgesehen ist.

8. Handapparat (1) nach einem der vorherigen Ansprüche, **dadurch gekennzeichnet, daß** am Rand der Öffnung (20) ins Innere des Gehäuses (5) gerichtete Begrenzungsstege (85, 86, 87) so angeordnet sind, daß zum Einrasten und Entrasten jeweils eine Drehrichtung für das Trageteil (10) vorgegeben ist.

9. Handapparat (1) nach einem der vorherigen Ansprüche, **dadurch gekennzeichnet, daß** jeweils eine etwa einen Viertelkreis bildende Drehung des Trageteils (10) zum Einrasten und Entrasten erforderlich ist.

## Claims

1. Handset (1), in particular a cordless telephone, having a housing (5) and a carrying part (10), a button (15) which is resiliently connected to the carrying part (10) being provided, the carrying part (10) being able to be inserted into an opening (20) of the housing (5), a latching lug (25) of the button (15) latching into a latching opening (30) of the housing (5) when the carrying part (10) has been inserted into the housing, and the carrying part (10) being arrested on the housing (5) by means of a fastening rib (40) which rests on a first web (35) of the housing (5), **characterized in that** the opening (20) is approximately circular, **in that**, in order to fasten the carrying part (10) to the housing (5), the latching lug (25) and the fastening rib (40) can be brought into the opening (20), the latching lug (25) can be latched into the latching opening (30) by rotating the carrying part (10) in the opening (20), and the fastening rib (40) can be pushed onto that side of the first web (35) which faces away from the carrying part (10).

2. Handset (1) according to Claim 1, **characterized in that**, in order to remove the carrying part (10) from the housing (5), the latching lug (25) can be removed from the latching opening (30) by pushing the button (15) and the fastening rib (40) can be pushed away from the first web (35) by rotating the carrying part (10) in the opening (20).

3. Handset (1) according to Claim 1 or 2, **characterized in that** the button (15) is formed by a slot (45) in the carrying part (10), said slot approximately forming a 3/4 circle.

4. Handset (1) according to one of the preceding claims, **characterized in that** the carrying part (10) has, on its side facing the housing (5), a side wall (50) which at least partially bounds the slot (45) and corresponds to a corresponding guide (55) arranged in the opening (20) of the housing (5).

5. Handset (1) according to one of the preceding claims, **characterized in that** the first web (35) projects into the opening (20) and the fastening rib (40) is fastened to the side wall (50).

6. Handset (1) according to one of the preceding claims, **characterized in that** the latching opening (30) is arranged on a second web (60), which projects into the opening (20), and is formed by two boundary walls (65, 70) which are directed into the interior of the housing (5), one of the boundary walls (70) being wedge-shaped in order to latch in the latching lug (25).

7. Handset (1) according to one of the preceding claims, **characterized in that** a first recess (75) for inserting the latching lug (25) and a second recess (80) for inserting the fastening rib (40) are provided in the opening (20) between the webs (35, 60).

8. Handset (1) according to one of the preceding claims, **characterized in that** boundary webs (85, 86, 87) which are directed into the interior of the housing (5) are arranged at the edge of the opening (20) in such a manner that a respective direction of rotation is prescribed for the carrying part (10) for the purpose of latching and unlatching.

9. Handset (1) according to one of the preceding claims, **characterized in that** rotation of the carrying part (10), which approximately forms a quarter circle, is respectively required for latching and unlatching.

## Revendications

1. Combiné téléphonique (1), en particulier téléphone sans fil, comportant un boîtier (5) et un support (10), un contact (15) relié élastiquement au support (10), le support (10) pouvant être introduit dans une ouverture (20) du boîtier (5), un ergot d'encliquetage (25) du contact (15) s'encliquetant dans une ouverture d'encliquetage (30) du boîtier (5) lorsque le support (10) est placé dans le boîtier (5) et le support (10) étant bloqué contre le boîtier (5) par une rainure de fixation (40) reposant sur une première nervure (35) du boîtier (5),
**caractérisé en ce que**
l'ouverture (20) est à peu près circulaire, l'ergot d'encliquetage (25) et la rainure de fixation (40) viennent dans l'ouverture (20) pour fixer le support (10) au boîtier (5), l'ergot d'encliquetage (25) vient dans l'ouverture d'encliquetage (30) par une rotation du support (10) vient dans l'ouverture (20) et la rainure de fixation (40) coulisse sur la face de la première nervure (35) détournée du support (10).

2. Combiné téléphonique (1) selon la revendication 1,
**caractérisé en ce qu'**
pour enlever le support (10) du boîtier (5) l'ergot d'encliquetage (25) sort de l'ouverture d'encliquetage (30) par une pression du contact (15) et la rainure de fixation (40) s'écarte de la première nervure (35) par une rotation du support (10) dans l'ouverture (20).

3. Combiné téléphonique (1) selon la revendication 1 ou 2,
**caractérisé en ce que**
le contact (15) est une fente (45) du support (10) formant à peu près 3/4 de cercle.

4. Combiné téléphonique (1) selon l'une quelconque des revendications précédentes,
**caractérisé en ce que**
le support (10) présente sur sa face tournée vers le boîtier (5) une paroi latérale (50) limitant au moins partiellement la fente (45) et qui coïncide avec un guidage (55) correspondant dans l'ouverture (20) du boîtier (5).

5. Combiné téléphonique (1) selon l'une quelconque des revendications précédentes,
**caractérisé en ce que**
la première nervure (35) pénètre dans l'ouverture (20) et la rainure de fixation (40) est fixée à la paroi latérale (50).

6. Combiné téléphonique (1) selon l'une quelconque des revendications précédentes,
**caractérisé en ce que**
l'ouverture d'encliquetage (30) est sur une seconde nervure (60) pénétrant dans l'ouverture (20), et formée par deux parois de limitation (65, 70) dressées à l'intérieur du boîtier (5), et l'une des parois de limitation (70) permettant d'encliqueter l'ergot d'encliquetage (25) est cunéiforme.

7. Combiné téléphonique (1) selon l'une quelconque des revendications précédentes,
**caractérisé en ce qu'**
entre les nervures (35, 60) l'ouverture (20) comporte une première encoche (75) destinée à l'introduction de l'ergot d'encliquetage (25) et une seconde encoche (80) destinée à l'introduction de la rainure de fixation (40).

8. Combiné téléphonique (1) selon l'une quelconque des revendications précédentes,
**caractérisé en ce que**
les nervures de limitation (85, 86, 87) dressées à l'intérieur du boîtier (5) sont prévues au bord de l'ouverture (20) pour déterminer un sens de rotation du support (10) respectivement pour l'encliquetage et le désencliquetage.

9. Combiné téléphonique (1) selon l'une quelconque des revendications précédentes,
**caractérisé en ce qu'**
une rotation du support (10) d'à peu près un quart de cercle est nécessaire respectivement pour l'encliquetage et le désencliquetage.
